(19) Europäisches Patentamt
European Patent Office
Office européen des brevets

(11) EP 4 163 994 B1

(12) EUROPEAN PATENT SPECIFICATION

(45) Date of publication and mention of the grant of the patent:
**06.05.2026 Bulletin 2026/19**

(21) Application number: **22199978.2**

(22) Date of filing: **06.10.2022**

(51) International Patent Classification (IPC):
***H01M 4/133*** *(2010.01)* ***H01M 4/134*** *(2010.01)*
***H01M 4/1393*** *(2010.01)* ***H01M 4/1395*** *(2010.01)*
***H01M 4/36*** *(2006.01)* ***H01M 4/38*** *(2006.01)*
***H01M 4/587*** *(2010.01)* ***H01M 4/62*** *(2006.01)*
*H01M 10/0525* *(2010.01)*

(52) Cooperative Patent Classification (CPC):
**H01M 4/134; H01M 4/133; H01M 4/1393; H01M 4/1395; H01M 4/366; H01M 4/386; H01M 4/587; H01M 4/625;** H01M 10/0525; Y02E 60/10

(54) **NEGATIVE ELECTRODE FOR RECHARGEABLE LITHIUM BATTERY AND RECHARGEABLE LITHIUM BATTERY INCLUDING SAME**

NEGATIVE ELEKTRODE FÜR EINE WIEDERAUFLADBARE LITHIUMBATTERIE UND WIEDERAUFLADBARE LITHIUMBATTERIE DAMIT

ÉLECTRODE NÉGATIVE POUR BATTERIE AU LITHIUM RECHARGEABLE ET BATTERIE AU LITHIUM RECHARGEABLE LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.10.2021 KR 20210133339**

(43) Date of publication of application:
**12.04.2023 Bulletin 2023/15**

(73) Proprietor: **Samsung SDI Co., Ltd.**
**Yongin-si, Gyeonggi-do 17084 (KR)**

(72) Inventors:
- **Seol, Jongheon**
  **17084 Yongin-si, Gyeonggi-do (KR)**
- **Kim, Minjae**
  **17084 Yongin-si, Gyeonggi-do (KR)**
- **Kim, Soochan**
  **17084 Yongin-si, Gyeonggi-do (KR)**
- **Jung, Hyeseung**
  **17084 Yongin-si, Gyeonggi-do (KR)**
- **Cho, Chaewoong**
  **17084 Yongin-si, Gyeonggi-do (KR)**
- **Hong, Minyoung**
  **17084 Yongin-si, Gyeonggi-do (KR)**
- **Nam, Junghyun**
  **17084 Yongin-si, Gyeonggi-do (KR)**
- **Han, Sungsoo**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(56) References cited:
**EP-A1- 2 765 636**
**EP-A2- 3 678 228**
**EP-B1- 2 771 929**
**EP-B1- 2 915 204**
**WO-A1-2021/034145**
**CN-A- 105 576 185**
**CN-A- 113 228 342**
**JP-A- 2015 525 453**
**US-A1- 2012 244 440**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 163 994 B1

## Description

## BACKGROUND OF THE INVENTION

### (a) Field of the Invention

It relates to a negative electrode for a rechargeable lithium battery and a rechargeable lithium battery including the same.

### (b) Description of the Related Art

Recently, the rapid spread of electronic devices such as mobile phones, laptop computers, and electric vehicles using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, researches for improving performances of rechargeable lithium are actively being undertaken.

A rechargeable lithium battery includes a positive electrode and a negative electrode which may include an active material being capable of intercalating and deintercalating lithium ions, and an electrolyte, and generate electrical energy due to an oxidation and reduction reaction when lithium ions are intercalated and deintercalated into the positive electrode and the negative electrode.

As for a positive active material of a rechargeable lithium battery, transition metal compounds such as lithium cobalt oxides, lithium nickel oxides, and lithium manganese oxides are mainly used. As the negative active material, a crystalline carbonaceous material such as natural graphite or artificial graphite, or an amorphous carbonaceous material, is used.

Nowadays, the negative active material layer has been thickly formed in order to improve the energy density of the rechargeable lithium battery, and especially, there is attempted to prepare a negative active material layer in the form of double layer using the silicon-based active material. For example EP 3 678 228 A2 discloses a negative electrode including: a current collector for a negative electrode; a first negative electrode active material layer positioned on at least one surface of the current collector for a negative electrode and containing a carbonaceous active material; and a second negative electrode active material layer positioned on the first negative electrode active material layer and containing a silicon-based active material and carbon nanotubes. A lithium secondary battery including the negative electrode is also disclosed. However, this causes problems such as breakdown of the negative electrode due to the volume expansion and shrinkage of the silicon-based active material during charging and discharging.

CN105576185A discloses a negative electrode according to the state of the art for a rechargeable lithium battery comprising a current collector, and a negative active material layer on the current collector and comprising a negative active material and a conductive material, wherein the negative active material comprises a silicon-based active material, the conductive material comprises carbon nanotubes, and the silicon-based active material comprises a composite of Si and carbon.

## SUMMARY OF THE INVENTION

It was object of the present invention to provide a negative electrode for a rechargeable lithium battery exhibiting high energy density and cycle-life characteristics.

Another object of the present invention was to provide a rechargeable lithium battery including the negative electrode.

The present invention is directed to a negative electrode as defined in claim 1. The negative electrode includes a current collector and a negative active material layer on the current collector and including a negative active material and a conductive material The negative active material includes or consists of a silicon-based active material and the conductive material includes or consists of carbon nanotubes, wherein the negative active material and the conductive material are included in the negative active material layer in order to satisfy a relationship of Equation 1 and Equation 2.

[Equation 1]

$$26 < A*B-\{(C*D)/10\} < 55$$

[Equation 2]

$$600 \leq D \leq 1000$$

(In Equations 1 and 2,

A is wt% of the silicon-based active material included in the negative active material layer,
B is a specific surface area ($m^2/g$) according to a BET method specified by ISO 9277:2010 of the silicon-based active material included in the negative active material layer,
C is wt% of carbon nanotubes included in the negative active material layer, and
D is a specific surface area ($m^2/g$) according to a BET method specified by ISO 9277:2010 of the carbon nanotubes included in the negative active material layer, wherein the silicon-based active material comprises a composite of Si and carbon.

The specific surface area according to gas adsorption of the silicon-based active material may be about 1 $m^2/g$ to about 20 $m^2/g$.

An amount of the negative active material may be about 95 wt% to about 99.99 wt% based on a total, 100 wt%, of the negative active material layer.

An amount of the carbon nanotubes may be about 0.01 wt% to about 5 wt% based on the total, 100 wt%, of the negative active material layer.

According to another aspect of the present invention there is provided a method of preparing a negative electrode for a rechargeable lithium battery as defined in claim 6. The method comprises the steps of:

distributing a conductive material in a solvent;
adding a negative active material to the distributed liquid to prepare a composition for a negative active material layer; and
coating and drying the composition for the negative active material layer on a current collector to obtain the negative active material layer,
wherein the conductive material comprises carbon nanotubes,
the negative active material comprises a silicon-based active material, and
the negative active material and the conductive material are comprised in the negative active material layer in order to satisfy a relationship of Equation 1 and Equation 2:

[Equation 1]

$$26 < A*B-\{(C*D)/10\} < 55$$

[Equation 2]

$$600 \leq D \leq 1000$$

in Equations 1 and 2,
A is wt% of the silicon-based active material comprised in the negative active material layer,
B is a specific surface area ($m^2/g$) according to a BET method specified by ISO 9277:2010 of the silicon-based active material comprised in the negative active material layer,
C is wt% of carbon nanotubes comprised in the negative active material layer, and
D is a specific surface area ($m^2/g$) according to a BET method specified by ISO 9277:2010 of the carbon nanotubes comprised in the negative active material layer, wherein the silicon-based active material comprises a composite of Si and carbon. A concentration of the conductive material in the dispersed liquid may be about 0.5 wt% to about 10 wt%.

Still another embodiment provides a negative electrode for a rechargeable lithium battery prepared by the method.

Still another embodiment provides a rechargeable lithium battery including the negative electrode, a positive electrode, and an electrolyte.

The negative active material according to one embodiment may exhibit high energy density and excellent cycle-life characteristics.

## BRIEF DESCRIPTION OF THE DRAWINGS

FIG. 1 is schematic view showing the structure of a lithium secondary battery according to an embodiment.
FIG. 2 is a graph showing the cycle-life characteristics of the cells according to Example 1 and Comparative Examples 1 to 3.

## DETAILED DESCRIPTION OF THE INVENTION

Hereinafter, embodiments of the present invention are described in detail. However, these embodiments are merely examples, the present invention is not limited thereto, and the present invention is defined by the scope of claims.
A negative electrode for a rechargeable lithium battery according to the present invention includes a current collector and a negative active material layer on the current collector. The negative active material layer includes a negative active material and a conductive material, and herein, the negative active material includes a silicon-based active material and the conductive material includes carbon nanotubes.
In the negative active material including the silicon-based active material as the negative active material and carbon nanotubes as the conductive material, the amount of the silicon-based active material and the amount of carbon nanotubes are suitably controlled depending on a specific surface area of the silicon-based active material and a specific surface area of the carbon nanotubes.
When it is illustrated in more detail, the silicon-based active material and carbon nanotubes are included in the active material layer in order to satisfy the relationship of Equation 1 and Equation 2.

[Equation]

$$26 < A*B-\{(C*D)/10\} < 55$$

[Equation 2]

$$600 \leq D \leq 1000$$

In Equations 1 and 2,

A is wt% of the silicon-based active material included in the negative active material layer,
B is a specific surface area ($m^2$/g) according to a BET method specified by ISO 9277:2010 of the silicon-based active material included in the negative active material layer,
C is wt% of carbon nanotubes included in the negative active material layer, and
D is a specific surface area ($m^2$/g) according to a BET method specified by ISO 9277:2010 of the carbon nanotubes included in the negative active material layer.

As such, the carbon nanotube conductive material included in the negative active material layer may have a specific surface area according to gas adsorption of 600 $m^2$/g to 1000 $m^2$/g. When an amount of the conductive material with the specific surface area according to the gas adsorption, the specific surface area of the carbon nanotubes according to the gas adsorption, and an amount of the included silicon-based active material are adjusted in order to satisfy Equation 1, high energy density and an excellent cycle-life characteristic may be exhibited.
The specific surface area according to the gas adsorption generally refers as a value measured by using nitrogen gas, and specifically, indicates a BET specific surface area. In particular, ISO 9277:2010 specifies the determination of the overall specific external and internal surface area of disperse or porous solids by measuring the amount of physically adsorbed gas according to the Brunauer, Emmett and Teller (BET) method.
Even though the silicon-based active material and the carbon nanotube conductive material are used, if the specific surface area according to the gas adsorption and the amounts are not satisfied in Equation 1 and Equation 2, the energy density is deteriorated, and particularly, the cycle-life characteristic is significantly deteriorated.
Furthermore, the effects by satisfying the conditions of Equation 1 and Equation 2 may be more effectively obtained by using a conductive distributed liquid in which the conductive material is distributed.
When it is illustrated in more detail, it is as below.
A conductive material with a specific surface area according to gas adsorption of 600 $m^2$/g to 1000 $m^2$/g is distributed in a

solvent to prepare a distributed liquid. The specific surface area of the distributed liquid may be indirectly measured by laser diffraction according to ISO 13320-1: 2009, which is used to measure a specific surface area of a liquid state, and the resulting distributed liquid may have a specific surface area found by laser diffraction may be about 60 $m^2/g$ to about 100 $m^2/g$. That is, the conductive material having a very large specific surface area, for example, a specific surface area found by the gas adsorption of about 600 $m^2/g$ to about 1000 $m^2/g$ is distributed in a solvent to prepare a distributed liquid.

The distribution may be performed by using any techniques. The specific surface area found by the laser diffraction may be about 60 $m^2/g$ to about 100 $m^2/g$.

In one embodiment, the specific surface area of the distributed liquid may be measured by instruments for measuring laser diffraction, for example, a Mastersizer 3000 (available from Malvern Panalytical, Ltd.) device, and the specific surface area by the gas adsorption may be measured by using instruments such as a Quantachrome Inst. (Autosorb-iQ/MP) device using desorption and adsorption of nitrogen gas.

The solvent may be water, an alcohol, or combination thereof. The alcohol may be methanol, ethanol, propanol, or a combination thereof.

The conductive material may be carbon nanotubes, for example, single-walled carbon nanotubes, multi-walled carbon nanotubes, or a combination thereof, and specifically, may be single-walled carbon nanotubes.

If a negative electrode is prepared by using carbon nanotubes having a specific surface area of about 600 $m^2/g$ to 1000 $m^2/g$, rather than the conductive distributed liquid in which the conductive material which is carbon nanotubes having surface area is distributed, obtained agglomerated carbon nanotubes are larger than the active material, substantially close all pores in the negative electrode, and is not effectively dispersed on a surface of the active material, thereby obtaining no sufficient desired effects.

Alternatively, if the active material is mixed with a conductive material in a form of a solid, rather than mixed with a conductive material in a form of a distributed liquid, obtained agglomerated carbon nanotubes are larger than the active material, substantially close all pores in the negative electrode, and is not effectively dispersed on a surface of the active material, thereby obtaining no sufficient desired effects.

The distributed liquid including the conductive material may have a concentration of about 0.1 wt% to about 5 wt%. When the concentration of the distributed liquid including the conductive material is within the range, the distributed liquid may effectively prevent a reduction of the solid of the composition for the negative active material layer and allows preparation of a distributed liquid with a viscosity to sufficient flow in the preparation of the composition for the negative active material layer using the conductive distributed liquid.

The carbon nanotubes may have an average length of about 0.5 $\mu$m to about 20 $\mu$m, or about 1 $\mu$m to about 10 $\mu$m. Furthermore, the carbon nanotubes may have a width (diameter) of about 0.5 nm to about 3 nm, or about 1 nm to about 2 nm. The average length of carbon nanotubes does not indicate only a perfectly straight length, but may be a length corresponding to a long axis of the linear conductive material in the active material layer. The carbon nanotube conductive material with the average length and the width allows to readily contact the negative active material.

The specific surface area by the gas adsorption of the silicon-based active material which is the negative active material may be about 1 $m^2/g$ to about 20 $m^2/g$, or about 4 $m^2/g$ to 18 $m^2/g$. The silicon-based active material having the specific surface area by the gas adsorption which is satisfied in the range, may have advantages in which irreversible capacity may be reduced and a resistance for deintercalating lithium ions may be further decreased.

An amount of the silicon-based active material may be about 95 wt% to about 99.99 wt% based on the total, 100 wt%, of the negative active material layer, or about 95 wt% to about 99.95 wt%. When the amount of the silicon-based active material is within the range, a battery with high energy density may be realized.

The silicon-based active material is a composite of Si and carbon.

The composite of Si and carbon includes a composite of Si particles and a first carbon-based material. The first carbon-based material may be amorphous carbon or crystalline carbon. Examples of the composite may include a core in which Si particles are mixed with a second carbon-based material, and a third-based material surrounding on the core. The second carbon-based material and the third carbon-based material may be the same as or different each other, and may be amorphous carbon or crystalline carbon.

The amorphous carbon may be pitch carbon, soft carbon, hard carbon, mesophase pitch carbide, sintered cokes, carbon fiber, or a combination thereof, and the crystalline carbon may be artificial graphite, natural graphite, or a combination thereof.

The Si particles may have a particle diameter of about 10 nm to about 30 $\mu$m, and according to one embodiment, about 10 nm to about 1000 nm, and according to another embodiment, about 20 nm to about 150 nm. When the average particle diameter of the Si particles is within the range, the volume expansion caused during charging and discharging may be suppressed and the disconnection of the conductive path due to particle breakage during charging and discharging may be prevented.

In the specification, a particle diameter may be the average particle diameter of the particles. In this case, the average particle diameter may mean a particle diameter (D50) measured as a cumulative volume. Such a particle diameter (D50) means the average particle diameter (D50), which means the diameter of particles having a cumulative volume of 50

volume% in the particle size distribution.

The average particle size (D50) may be measured by a method that is well known to those skilled in the art, for example, by a particle size analyzer, by a transmission electron microscopic image, or by a scanning electron microscopic image. Alternatively, a dynamic light-scattering measurement device may be used to perform an analysis for data which is obtained using the measurement device, and the number of particles is counted for each particle size range. From this, the average particle diameter (D50) value may be obtained through a calculation.

When the composite of Si and carbon includes the Si particles and the first carbon-based material, an amount of the Si particles may be about 30 wt% to about 70 wt%, and according to one embodiment, about 40 wt% to about 50 wt%. An amount of the first carbon-based material may about 70 wt% to about 30 wt%, and according to one embodiment, may be about 60 wt% to about 50 wt%. When the amount of the Si particles and the first carbon-based material are within the range, high-capacity characteristics may be exhibited.

When the composite of Si and carbon includes a core in which the Si particles are mixed with a second carbon-based material, and a third carbon-based material surrounding the core, the third carbon-based material may be presented in a thickness of about 5 nm to about 100 nm. Furthermore, the third carbon-based material may be presented in an amount of about 1 wt% to about 50 wt% based on the total, 100 wt% of the composite of Si and carbon, the Si particles may be presented in an amount of about 30 wt% to about 70 wt% based on the total, 100 wt% of the composite of Si and carbon, and the second carbon-based material may be presented in an amount of about 20 wt% to about 69 wt% based on the total, 100 wt% of the composite of Si and carbon. When the amounts of the Si particles, the third carbon-based material, and the second carbon-based material are within the range, the discharge capacity may be excellent and the capacity retention may be improved.

The negative active material may further include a carbon-based active material, together with the silicon-based active material. The carbon-based active material may be artificial graphite, natural graphite, or a combination thereof.

When carbon-based active material is further included as the negative active material, a mixing ratio of the carbon-based active material and the silicon-based active material may be about 0.1:99.9 wt% to about 97:3 wt%, about 50:50 wt% to about 97:3 wt%, or about 60:40 wt% to about 97:3 wt%. When the mixing ratio of the carbon-based active material and the silicon-based active material is within the range, the volume expansion of the negative active material may be more effectively suppressed and the conductivity may be more improved.

An amount of the negative active material in the negative active material layer may be about 95 wt% to about 99.5 wt% based on the total, 100 wt%, of the negative active material layer. The amount of the negative active material may be an amount of the silicon-based active material, or an amount of a mixture of the silicon-based active material and the carbon-based active material if the silicon-based active material and the carbon-based active material are mixed and used as the negative active material.

The negative active material layer may further include a binder. When the negative active material layer further includes the binder, the negative active material may be included in the negative active material layer in an amount of about 94.99 wt% to about 90 wt% based on the total of the negative active material layer, the conductive material may be included in the negative active material layer in an amount of about 5 wt% to about 0.01 wt%, and the binder may be included in the negative active material layer in an amount of about 1 wt% to about 5 wt%.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylate polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may be a styrene-butadiene rubber (SBR), acrylated styrene-butadiene rubber (ABR), acrylonitrile-butadiene rubber, a acryl rubber, a butyl rubber, a fluorine rubber, an ethylene oxide-containing polymer, polyvinylpyrrolidone, polypropylene, polyepichlorohydrin, polyphosphazene, an ethylene propylene diene copolymer, polyvinylpyridine, chlorosulfonated polyethylene, latex, a polyester resin, an acryl resin, a phenol resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The current collector may include one selected from a copper foil, a nickel foil, a stainless steel foil, a titanium foil, a nickel foam, a copper foam, a polymer substrate coated with a conductive metal, and a combination thereof, but is not limited thereto.

Another embodiment provides a rechargeable lithium battery including the negative electrode, a positive electrode, and an electrolyte.

The positive electrode may include a current collector and a positive active material layer formed on the current

collector.

The positive electrode active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. $Li_aA_{1-b}X_bD_2$ ($0.90 \leq a \leq 1.8$, $0 \leq b \leq 0.5$); $Li_aA_{1-b}X_bO_{2-c}D_c$ ($0.90 \leq a \leq 1.8$, $0 \leq b \leq 0.5$, $0 \leq c \leq 0.05$); $Li_aE_{1-b}X_bO_{2-c}D_c$ ($0.90 \leq a \leq 1.8$, $0 \leq b \leq 0.5$, $0 \leq c \leq 0.05$); $Li_aE_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cD_\alpha$ ($0.90 \leq a \leq 1.8$, $0 \leq b \leq 0.5$, $0 \leq c \leq 0.5$, $0 < a \leq 2$); $Li_aNi_{1-b-c}Co_bX_cO_{2-\alpha}T_\alpha$ ($0.90 \leq a \leq 1.8$, $0 \leq b \leq 0.5$, $0 \leq c \leq 0.5$, $0 < a < 2$); $Li_aNi_{1-b-c}Co_bX_cO_{2-\alpha}T_2$ ($0.90 \leq a \leq 1.8$, $0 \leq b \leq 0.5$, $0 \leq c \leq 0.5$, $0 < a < 2$); $Li_aNi_{1-b-c}Mn_bX_cD_\alpha$ ($0.90 \leq a \leq 1.8$, $0 \leq b \leq 0.5$, $0 \leq c \leq 0.5$, $0 < a \leq 2$); $Li_aNi_{1-b-c}Mn_bX_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Mn_bX_cO_{2-\alpha}T_2$ ($0.90 \leq a \leq 1.8$, $0 \leq b \leq 0.5$, $0 \leq c \leq 0.5$,$0 < a < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$); $Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNi_bCo_cAl_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2 PO_{43}$ ($0 \leq f \leq 2$); $Li_{(3-f)}Fe_2 PO_{43}$ ($0 \leq f \leq 2$); $Li_aFePO_4$ ($0.90 \leq a \leq 1.8$)

In the above chemical formulae, A is selected from Ni, Co, Mn, and a combination thereof; X is selected from Al, Ni, Co, Mn, Cr, Fe, Mg, Sr, V, a rare earth element, and a combination thereof; $D^1$ is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, a content of the positive active material may be about 90 wt% to about 98 wt% based on the total weight of the positive active material layer.

In an embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive electrode active material particles with one another and with a current collector. Examples of the binder may be polyvinyl alcohol, carboxymethyl cellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, acrylated styrene-butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may

include cyclohexanone and the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, the mixture ratio may be controlled in accordance with desirable battery performance, and it may be well known to those skilled in the related art.

Furthermore, the carbonate-based solvent may desirably include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

The organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

[Chemical Formula 1]

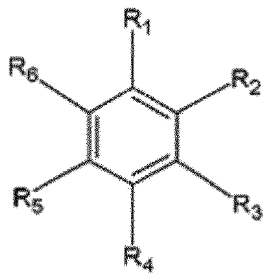

In Chemical Formula 1, $R_1$ to $R_6$ are the same as or different and may each be selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combination thereof.

The electrolyte may further include vinylene carbonate, an ethylene carbonate-based compound represented by Chemical Formula 2 as an additive for improving cycle life.

[Chemical Formula 2]

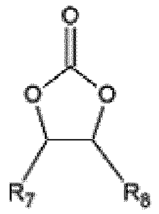

In Chemical Formula 2, $R_7$ and $R_8$ are the same or different and may each independently be hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, where x and y are natural numbers, e.g. an integer of 1 to 20), lithium difluoro(bisoxolato) phosphate), LiCl, LiI, $LiB(C_2O_4)_2$ (lithium bis(oxalato) borate: LiBOB) and lithium difluoro(oxalate)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride, or multilayers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment. The rechargeable lithium battery according to an embodiment is illustrated as a prismatic battery, but is not limited thereto, and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

(Example 1)

Single-walled carbon nanotubes having a BET specific surface area of 960 $m^2/g$ (average length: 1 μm to 10 μm, width (diameter): 1 nm to 3 nm) conductive material was add to a water solvent and distributed to prepare a conductive material distributed liquid. The obtained conductive material distributed liquid had a laser diffraction specific surface area of 96 $m^2/g$, and had a concentration of 2.5 wt%.

A graphite negative active material, a Si-carbon composite (BET specific surface area of 5 $m^2/g$) negative active material, the conductive material distributed liquid, a carboxymethyl cellulose thickener and a styrene-butadiene rubber binder were mixed in water solvent to prepare a negative active material layer slurry.

In the mixing, each amount of the materials was to be graphite negative active material at 85 wt%, Si-carbon composite at 11 wt%, single-walled carbon nanotube conductive material at 0.05 wt%, carboxymethyl cellulose thickener at 1.95 wt%, and styrene-butadiene rubber at 2 wt%, as amounts of solids.

Herein, the Si-carbon composite was used as a Si-carbon composite including a core including an artificial graphite and silicon particles, and the soft carbon coating layer on the surface of the core. The soft carbon coating layer had a thickness of 20 nm and the silicon particles had an average particle diameter D50 of 100 nm.

The negative active material layer slurry was coated on a copper foil current collector, dried, and pressed to prepare a negative electrode.

Using the negative electrode, a polyethylene/polypropylene separator, a lithium metal counter electrode, and an electrolyte solution, a half-cell was fabricated by the general procedure.

The electrolyte was used 1.5M $LiPF_6$ dissolved in a mixed solvent of ethylene carbonate, ethylmethyl carbonate, and dimethyl carbonate (20:10:70 volume ratio).

(Example 2)

Single-walled carbon nanotubes having a BET specific surface area of 600 $m^2/g$ (average length: 1 μm to 10 μm, width (diameter): 1 nm to 3 nm) conductive material was added to a water solvent and distributed to prepare a conductive material distributed liquid. The obtained conductive material distributed liquid had a laser diffraction specific surface area of 60 $m^2/g$, and had a concentration of 2.5 wt%.

A negative electrode and a half-cell were fabricated by the same procedure as in Example 1, except that the conductive material distributed liquid was used.

(Example 3)

Single-walled carbon nanotubes having a BET specific surface area of 1000 $m^2/g$ (average length: 1 μm to 10

μm, width (diameter): 1 nm to 3 nm) conductive material was added to a water solvent and distributed to prepare a conductive material distributed liquid. The obtained conductive material distributed liquid had a laser diffraction specific surface area of 100 $m^2/g$, and had a concentration of 2.5 wt%.

A negative electrode and a half-cell were fabricated by the same procedure as in Example 1, except that the conductive material distributed liquid was used.

(Example 4)

Single-walled carbon nanotubes having a BET specific surface area of 900 $m^2/g$ (average length: 1 μm to 10 μm, width (diameter): 1 nm to 3 nm) conductive material was added to a water solvent and distributed to prepare a conductive material distributed liquid. The obtained conductive material distributed liquid had a laser diffraction specific surface area of 90 $m^2/g$, and had a concentration of 2.5 wt%.

A graphite negative active material, a Si-carbon composite (BET specific surface area of 7 $m^2/g$) negative active material, the conductive material distributed liquid, a carboxymethyl cellulose thickener, and a styrene-butadiene rubber binder were mixed in a water solvent to prepare a negative active material layer slurry.

In the mixing, each amount of the materials was to be graphite negative active material at 91.5 wt%, Si-carbon composite (BET specific surface area of 7 $m^2/g$) at 4.5 wt%, the conductive material at 0.05 wt%, a carboxymethyl cellulose thickener at 1.95 wt%, and styrene-butadiene rubber at 2 wt%, as an amount of solids. Herein, the Si-carbon composite was used as a Si-carbon composite including a core including an artificial graphite and silicon particles, and the soft carbon coating layer on the surface of the core. The soft carbon coating layer had a thickness of 20 nm and the silicon particle had an average particle diameter D50 of 100 nm.

Using the negative active material layer slurry, a negative electrode and a half-cell were fabricated by the same procedure as in Example 1.

(Comparative Example 1)

85 wt% of a graphite negative active material, 11 wt% of a Si-carbon composite (BET specific surface area of 5 $m^2/g$) negative active material used in Example 1, 0.05 wt% of a ketjen black conductive material, 1.95 wt% of a carboxymethyl cellulose thickener, and 2 wt% of a styrene-butadiene rubber binder were mixed in a water solvent to prepare a negative active material layer slurry.

Herein, the Si-carbon composite was used as a Si-carbon composite including a core including an artificial graphite and silicon particles, and the soft carbon coating layer on the surface of the core. The soft carbon coating layer had a thickness of 20 nm and the silicon particle had an average particle diameter D50 of 100 nm.

Using the negative active material layer slurry, a negative electrode and a half-cell were fabricated by the same procedure as in Example 1.

(Comparative Example 2)

92.2 wt% of a graphite negative active material, 3.8 wt% of a Si-carbon composite (BET specific surface area of 16.2 $m^2/g$) negative active material, 0.05 wt% of single-walled carbon nanotubes having a BET specific surface area of 960 $m^2/g$ (average length: 1 μm to 10 μm, width (diameter): 1 nm to 3 nm) conductive material, 1.95 wt% of a carboxymethyl cellulose thickener, and 2 wt% of a styrene-butadiene rubber binder were mixed in a water solvent to prepare a negative active material layer slurry.

Herein, the Si-carbon composite was used as a Si-carbon composite including a core including an artificial graphite and silicon particles, and the soft carbon coating layer on the surface of the core. The soft carbon coating layer had a thickness of 20 nm and the silicon particles had an average particle diameter D50 of 800 nm.

Using the negative active material layer slurry, a negative electrode and a half-cell were fabricated by the same procedure as in Example 1.

(Comparative Example 3)

91.5 wt% of a graphite negative active material, 4.5 wt% of a Si-carbon composite (BET specific surface area of 6.3 $m^2/g$) negative active material, 0.05 wt% of single-walled carbon nanotubes having a BET specific surface area of 960 $m^2/g$ (average length: 1 μm m to 10 μm, width (diameter): 1 nm to 3 nm) conductive material, 1.95 wt% of a carboxymethyl cellulose thickener, and 2 wt% of a styrene-butadiene rubber binder were mixed in a water solvent to prepare a negative active material layer slurry.

Herein, the Si-carbon composite was used as a Si-carbon composite including a core including artificial graphite and silicon particles, and the soft carbon coating layer on the surface of the core. The soft carbon coating layer had a

thickness of 20 nm and the silicon particle had an average particle diameter D50 of 135 nm.

Using the negative active material layer slurry, a negative electrode and a half-cell were fabricated by the same procedure as in Example 1.

(Comparative Example 4)

A negative active material layer slurry was prepared by the same procedure as in Example 1 except that single-walled carbon nanotubes having a BET specific surface area of 590 $m^2/g$ (average length: 1 μm to 10 μm, width (diameter: 1 nm to 3 nm) was used to prepare a conductive material distributed liquid. The obtained conductive material distributed liquid had a laser diffraction specific surface area of 59 $m^2/g$, and had a concentration of 1.0 wt%.

The negative active material layer slurry was coated on the copper foil current collector. However, the extremely low viscosity of the slurry (150 cps) caused separation of the negative active material layer from the current collector, during the drying, so that a negative electrode could not be prepared.

(Comparative Example 5)

A negative active material layer slurry was prepared by the same procedure as in Example 1 except that single-walled carbon nanotubes having a BET specific surface area of 1010 $m^2/g$ (average length: 1 μm to 10 μm, width (diameter): 1 nm to 3 nm) was used to prepare a conductive material distributed liquid. The obtained conductive material distributed liquid had a laser diffraction specific surface area of 101 $m^2/g$, and had a concentration of 4.0 wt%.

The coating using the negative active material layer slurry on the copper foil current collector was performed, but the surface protrusion on the surface of the coatings were largely formed which was unable to completely coat, so that a negative electrode could not be prepared.

Experimental Example 1) Measurements of Laser diffraction specific surface area of the conductive material distributed liquid and BET specific surface area of the conductive material in negative electrode

The BET specific surface areas for the conductive materials in the negative electrodes according to Examples 1 to 4 and Comparative Examples 1 to 3 were measured by using a Quantachrome Inst. (Autosorb-iQ/MP) instrument which utilize desorption and adsorption of nitrogen gas. The results are shown in Table 1.

The laser diffraction specific surface area for the conductive material distributed liquid of Examples 1 to 4 and Comparative Examples 4 and 5 were measured by using Mastersizer 3000 (available from Malvern Panalytical, Ltd) equipment. The results are shown in Table 1.

The BET specific surface area of the silicon-carbon composite (referred as a Si-C composite) and the amount of Si-C composite included in the negative active material layer are shown in Table 1. The value according to Equation 1 was calculated from the amount (A) and the BET specific surface area (B) of the Si-C composite negative active material, and an amount (C) and the BET specific surface area (D) of the single-walled carbon nanotubes (SWCNT). The results are shown in Table 1.

Equation 1

$$E=A*B-\{(C*D)/10\}$$

Table 1

| | Amount Amount of Si-C composite (wt%, A) | BET specific surface area of SiC composite ($m^2/g$, B) | Amount of SWCNT (wt%, C) | BET specific surface area of SWCNT in negative electrode ($m^2/g$, D) | Equation 1 value (E) | Laser diffraction specific surface area of conductive material distributed liquid |
|---|---|---|---|---|---|---|
| Example 1 | 11 | 5 | 0.05 | 960 | 50.2 | 96 |
| Example 2 | 11 | 5 | 0.05 | 600 | 52 | 60 |
| Example 3 | 11 | 5 | 0.05 | 1000 | 50 | 100 |
| Example 4 | 4.5 | 7 | 0.05 | 900 | 27 | 90 |

(continued)

| | Amount Amount of Si-C composite (wt%, A) | BET specific surface area of SiC composite ($m^2/g$, B) | Amount of SWCNT (wt%, C) | BET specific surface area of SWCNT in negative electrode ($m^2/g$, D) | Equation 1 value (E) | Laser diffraction specific surface area of conductive material distributed liquid |
|---|---|---|---|---|---|---|
| Comparative Example 1 | 11 | 5 | 0 | 0 | 55 | - |
| Comparative Example 2 | 3.8 | 16.2 | 0.05 | 960 | 56.76 | - |
| Comparative Example 3 | 4.5 | 6.3 | 0.05 | 960 | 23.55 | - |
| Comparative Example 4 | 11 | 5 | 0.05 | 590 | 52.05 | 59 |
| Comparative Example 5 | 11 | 5 | 0.05 | 1010 | 49.95 | 101 |

Experimental Example 2) Evaluation of capacity retention

The half-cells according to Examples 1 to 4 and the Comparative Examples 1 to 5 were charged and discharged at room temperature of 25 °C under the following charge and discharge conditions for 350 cycles.

Charge: constant current-constant voltage, 0.33 C, 4.2 V, 0.05 C cut-of and pausing for 10 minutes

Discharge: constant current 1.0 C, 2.5 V cut-off, and pausing for 10 minutes

The ratio of the discharge capacity at each cycle to the discharge capacity at $1^{st}$ were measured. The results are shown in Table 2. The status for Comparative Examples 4 and 5 are shown in Table 1.

Table 2

| | Capacity retention (%) |
|---|---|
| Example 1 | 89 % |
| Example 2 | 88 % |
| Example 3 | 89 % |
| Example 4 | 88 % |
| Comparative Example 1 | 79 % |
| Comparative Example 2 | Reduction of to be 70 % or less at 230 cycles |
| Comparative Example 3 | 87% |
| Comparative Example 4 | Unable to coat (low viscosity of slurry caused separation in coating) |
| Comparative Example 5 | Unable to coating (large formation of protrusions on the surface of the coatings due to non-distributed SWCNT caused it to not coat) |

The results according to Example 1 and Comparative Examples 1 to 3 are shown in FIG. 2.

As shown in Table 2 and FIG. 2, Example 1 to 4 exhibited good capacity retention compared to Comparative Examples 1 to 3.

Even though it satisfied Equation 1, the BET specific surface area of SWCNT is lower (Comparative Example 4) or higher (Comparative Example 5), the coating was not possible and thus a negative electrode was not prepared.

List of reference signs:

| | |
|---|---|
| 10 | positive electrode |
| 20 | negative electrode |
| 30 | separator |
| 40 | electrode assembly |
| 50 | case |
| 100 | lithium battery |

## Claims

**1.** A negative electrode (20) for a rechargeable lithium battery (100), comprising:

a current collector; and
a negative active material layer on the current collector and comprising a negative active material and a conductive material,
wherein the negative active material comprises a silicon-based active material,
the conductive material comprises carbon nanotubes, and
wherein the negative active material and the conductive material are comprised in the negative active material layer in order to satisfy a relationship of Equation 1 and Equation 2:

[Equation 1]

$$26 < A*B-\{(C*D)/10\} < 55$$

[Equation 2]

$$600 \leq D \leq 1000$$

in Equations 1 and 2,
A is wt% of the silicon-based active material comprised in the negative active material layer,
B is a specific surface area ($m^2/g$) according to a BET method specified by ISO 9277:2010 of the silicon-based active material comprised in the negative active material layer,
C is wt% of carbon nanotubes comprised in the negative active material layer, and
D is a specific surface area ($m^2/g$) according to a BET method specified by ISO 9277:2010 of the carbon nanotubes comprised in the negative active material layer,
wherein the silicon-based active material comprises a composite of Si and carbon.

**2.** The negative electrode for a rechargeable lithium battery of claim 1, wherein the specific surface area according to a BET method specified by ISO 9277:2010 of the silicon-based active material is 1 $m^2/g$ to 20 $m^2/g$.

**3.** The negative electrode for a rechargeable lithium battery of claim 1, wherein an amount of the negative active material is 95 wt% to 99.99 wt% based on total, 100 wt% of the negative active material layer.

**4.** The negative electrode for a rechargeable lithium battery of claim 1, wherein an amount of the carbon nanotubes is 0.01 wt% to 5 wt% based on the total, 100 wt% of the negative active material layer.

**5.** A method of preparing a negative electrode (20) for a rechargeable lithium battery (100), comprising the steps of:

distributing a conductive material in a solvent;
adding a negative active material to the distributed liquid to prepare a composition for a negative active material layer; and
coating and drying the composition for the negative active material layer on a current collector to obtain the negative active material layer,
wherein the conductive material comprises carbon nanotubes,
the negative active material comprises a silicon-based active material, and
the negative active material and the conductive material are comprised in the negative active material layer in order to satisfy a relationship of Equation 1 and Equation 2:

[Equation 1]

$$26 < A*B-\{(C*D)/10\} < 55$$

[Equation 2]

$$600 \leq D \leq 1000$$

in Equations 1 and 2,
A is wt% of the silicon-based active material comprised in the negative active material layer,
B is a specific surface area ($m^2/g$) according to a BET method specified by ISO 9277:2010 of the silicon-based active material comprised in the negative active material layer,
C is wt% of carbon nanotubes comprised in the negative active material layer, and
D is a specific surface area ($m^2/g$) according to a BET method specified by ISO 9277:2010 of the carbon nanotubes comprised in the negative active material layer,
wherein the silicon-based active material comprises a composite of Si and carbon.

**6.** The method of preparing a negative electrode for a rechargeable lithium battery of claim 5, wherein the dispersed liquid comprising the conductive material has a concentration of 0.1 wt% to 5 wt%.

**7.** A rechargeable lithium battery (100), comprising:

a negative electrode (20) of any one of claim 1 to claim 4;
a positive electrode (10); and
an electrolyte.

**Patentansprüche**

**1.** Negative Elektrode (20) für eine wiederaufladbare Lithiumbatterie (100), umfassend:

einen Stromkollektor; und
eine negative Aktivmaterialschicht auf dem Stromkollektor, die ein negatives Aktivmaterial und ein leitfähiges Material umfasst,
wobei das negative Aktivmaterial ein siliziumbasiertes Aktivmaterial umfasst,
das leitfähige Material Kohlenstoffnanoröhren umfasst, und
wobei das negative Aktivmaterial und das leitfähige Material so in der negativen Aktivmaterialschicht umfasst sind, dass sie eine Beziehung aus Gleichung 1 und Gleichung 2 erfüllen:

[Gleichung 1]

$$26 < A*B-\{(C*D)/10\} < 55$$

[Gleichung 2]

$$600 \leq D \leq 1000$$

wobei in den Gleichungen 1 und 2,
A das Gew.-% des siliziumbasierten Aktivmaterials ist, das in der negativen Aktivmaterialschicht umfasst ist,
B eine spezifische Oberfläche ($m^2/g$) gemäß einem durch ISO 9277:2010 spezifizierten BET-Verfahren des siliziumbasierten Aktivmaterials ist, das in der negativen Aktivmaterialschicht umfasst ist,
C das Gew.-% der Kohlenstoffnanoröhren ist, die in der negativen Aktivmaterialschicht umfasst sind, und
D eine spezifische Oberfläche ($m^2/g$) gemäß einem durch ISO 9277:2010 spezifizierten BET-Verfahren der Kohlenstoffnanoröhren ist, die in der negativen Aktivmaterialschicht umfasst sind,
wobei das siliziumbasierte Aktivmaterial einen Verbund aus Si und Kohlenstoff umfasst.

**2.** Negative Elektrode für eine wiederaufladbare Lithiumbatterie nach Anspruch 1, wobei die spezifische Oberfläche gemäß einem durch ISO 9277:2010 spezifizierten BET-Verfahren des siliziumbasierten Aktivmaterials 1 $m^2/g$ bis 20 $m^2/g$ beträgt.

**3.** Negative Elektrode für eine wiederaufladbare Lithiumbatterie nach Anspruch 1, wobei eine Menge des negativen Aktivmaterials 95 Gew.-% bis 99,99 Gew.-% basierend auf den gesamten 100 Gew.-% der negativen Aktivmaterialschicht beträgt.

**4.** Negative Elektrode für eine wiederaufladbare Lithiumbatterie nach Anspruch 1, wobei eine Menge der Kohlenstoffnanoröhren 0,01 Gew.-% bis 5 Gew.-% basierend auf den gesamten 100 Gew.-% der negativen Aktivmaterialschicht beträgt.

**5.** Verfahren zum Herstellen einer negativen Elektrode (20) für eine wiederaufladbare Lithiumbatterie (100), umfassend die folgenden Schritte:

Verteilen eines leitfähigen Materials in einem Lösungsmittel;
Zugeben eines negativen Aktivmaterials zu der verteilten Flüssigkeit zum Herstellen einer Zusammensetzung für eine negative Aktivmaterialschicht; und
Beschichten eines Stromkollektors mit der Zusammensetzung für die negative Aktivmaterialschicht und Trocknen, um die negative Aktivmaterialschicht zu erhalten,
wobei das leitfähige Material Kohlenstoffnanoröhren umfasst,
das negative Aktivmaterial ein siliziumbasiertes Aktivmaterial umfasst, und
das negative Aktivmaterial und das leitfähige Material so in der negativen Aktivmaterialschicht umfasst sind, dass sie eine Beziehung aus Gleichung 1 und Gleichung 2 erfüllen:

[Gleichung 1]

$$26 < A*B-\{(C*D)/10\} < 55$$

[Gleichung 2]

$$600 \leq D \leq 1000$$

wobei in den Gleichungen 1 und 2,
A das Gew.-% des siliziumbasierten Aktivmaterials ist, das in der negativen Aktivmaterialschicht umfasst ist,
B eine spezifische Oberfläche ($m^2/g$) gemäß einem durch ISO 9277:2010 spezifizierten BET-Verfahren des siliziumbasierten Aktivmaterials ist, das in der negativen Aktivmaterialschicht umfasst ist,
C das Gew.-% der Kohlenstoffnanoröhren ist, die in der negativen Aktivmaterialschicht umfasst sind, und
D eine spezifische Oberfläche ($m^2/g$) gemäß einem durch ISO 9277:2010 spezifizierten BET-Verfahren der Kohlenstoffnanoröhren ist, die in der negativen Aktivmaterialschicht umfasst sind,
wobei das siliziumbasierte Aktivmaterial einen Verbund aus Si und Kohlenstoff umfasst.

6. Verfahren zum Herstellen einer negativen Elektrode für eine wiederaufladbare Lithiumbatterie nach Anspruch 5, wobei die dispergierte Flüssigkeit, die das leitfähige Material umfasst, eine Konzentration von 0,1 Gew.-% bis 5 Gew.-% aufweist.

7. Wiederaufladbare Lithiumbatterie (100), umfassend:

   eine negative Elektrode (20) nach einem von Anspruch 1 bis Anspruch 4;
   eine positive Elektrode (10); und
   einen Elektrolyten.

**Revendications**

1. Électrode négative (20) pour une batterie au lithium rechargeable (100), comportant :

   un collecteur de courant ; et
   une couche de matériau actif négatif sur le collecteur de courant et comportant un matériau actif négatif et un matériau conducteur,
   dans laquelle le matériau actif négatif comporte un matériau actif à base de silicium,
   le matériau conducteur comporte des nanotubes de carbone, et
   dans laquelle le matériau actif négatif et le matériau conducteur sont compris dans la couche de matériau actif négatif afin de satisfaire à une relation de l'équation 1 et de l'équation 2 :

[Équation 1]

$$26 < A*B-\{(C*D)/10\} < 55$$

[Équation 2]

$$600 \leq D \leq 1000$$

   dans les équations 1 et 2,
   A est le % en poids du matériau actif à base de silicium compris dans la couche de matériau actif négatif,
   B est une surface spécifique ($m^2/g$) selon un procédé BET spécifié par l'ISO 9277:2010 du matériau actif à base de silicium compris dans la couche de matériau actif négatif,
   C est le % en poids de nanotubes de carbone compris dans la couche de matériau actif négatif, et
   D est une surface spécifique ($m^2/g$) selon un procédé BET spécifié par l'ISO 9277:2010 des nanotubes de carbone compris dans la couche de matériau actif négatif,
   dans laquelle le matériau actif à base de silicium comporte un composite de Si et de carbone.

2. Électrode négative pour une batterie au lithium rechargeable selon la revendication 1, dans laquelle la surface spécifique selon un procédé BET spécifié par l'ISO 9277:2010 du matériau actif à base de silicium est de 1 $m^2/g$ à 20 $m^2/g$.

3. Électrode négative pour une batterie au lithium rechargeable selon la revendication 1, dans laquelle une quantité du matériau actif négatif est de 95 % en poids à 99,99 % en poids par rapport à un total de 100 % en poids de la couche de matériau actif négatif.

4. Électrode négative pour une batterie au lithium rechargeable selon la revendication 1, dans laquelle une quantité des nanotubes de carbone est de 0,01 % en poids à 5 % en poids par rapport au total de 100 % en poids de la couche de matériau actif négatif.

5. Procédé de préparation d'une électrode négative (20) pour une batterie au lithium rechargeable (100), comportant les étapes suivantes :

   la distribution d'un matériau conducteur dans un solvant ;
   l'ajout d'un matériau actif négatif au liquide distribué pour préparer une composition pour une couche de matériau

actif négatif ; et
l'enrobage et le séchage de la composition pour la couche de matériau actif négatif sur un collecteur de courant pour obtenir la couche de matériau actif négatif,
dans lequel le matériau conducteur comporte des nanotubes de carbone,
le matériau actif négatif comporte un matériau actif à base de silicium, et
le matériau actif négatif et le matériau conducteur sont compris dans la couche de matériau actif négatif afin de satisfaire à une relation de l'équation 1 et de
l'équation 2 :

[Équation 1]

$$26 < A*B-\{(C*D)/10\} < 55$$

[Équation 2]

$$600 \leq D \leq 1000$$

dans les équations 1 et 2,
A est le % en poids du matériau actif à base de silicium compris dans la couche de matériau actif négatif,
B est une surface spécifique ($m^2/g$) selon un procédé BET spécifié par l'ISO 9277:2010 du matériau actif à base de silicium compris dans la couche de matériau actif négatif,
C est le % en poids de nanotubes de carbone compris dans la couche de matériau actif négatif, et
D est une surface spécifique ($m^2/g$) selon un procédé BET spécifié par l'ISO 9277:2010 des nanotubes de carbone compris dans la couche de matériau actif négatif,
dans laquelle le matériau actif à base de silicium comporte un composite de Si et de carbone.

**6.** Procédé de préparation d'une électrode négative pour une batterie au lithium rechargeable selon la revendication 5, dans lequel le liquide dispersé comportant le matériau conducteur présente une concentration de 0,1 % en poids à 5 % en poids.

**7.** Batterie rechargeable au lithium (100), comportant :

une électrode négative (20) selon l'une quelconque des revendications 1 à 4 ;
une électrode positive (10) ; et
un électrolyte.

FIG. 1

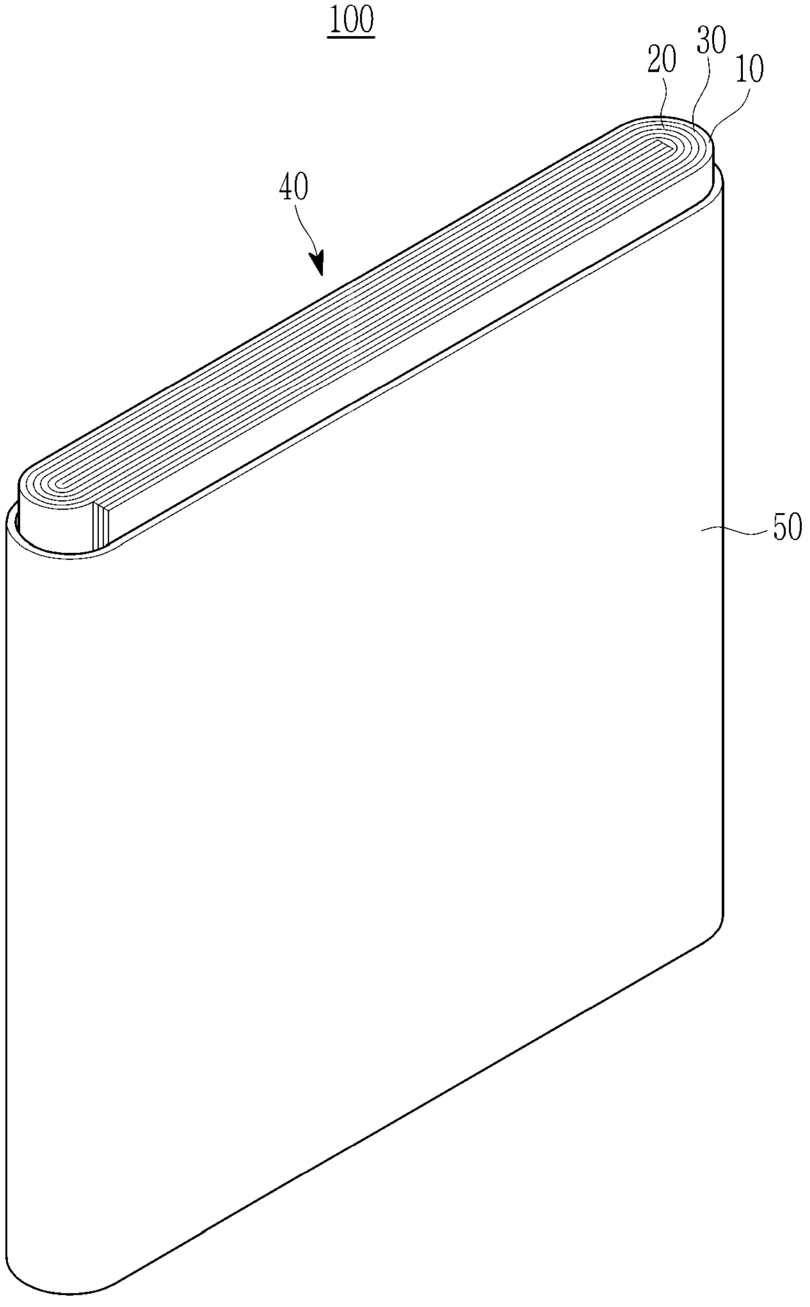

FIG. 2

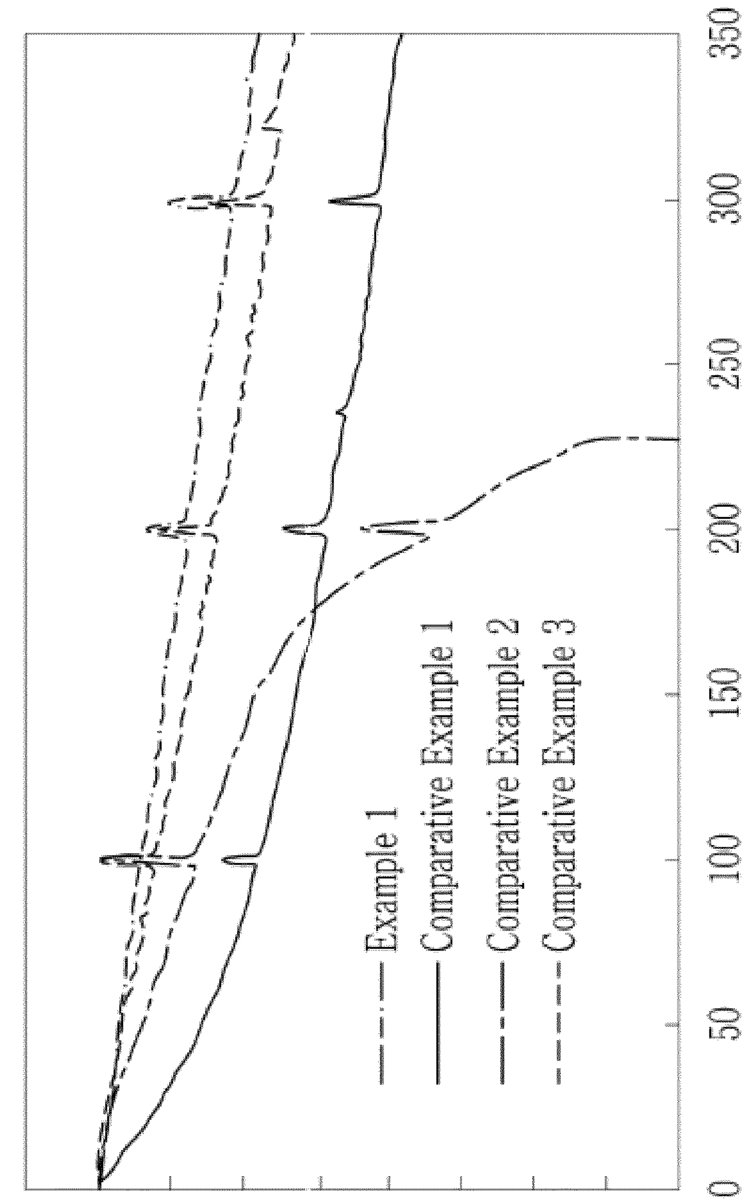
Retention (%)
105%
100%
95%
90%
85%
80%
75%
70%
65%
60%
0
50
100
150
200
250
300
350
Cycle No.
Example 1
Comparative Example 1
Comparative Example 2
Comparative Example 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3678228 A2
- CN 105576185 A